# EUROPÄISCHE PATENTSCHRIFT

(11) **EP 0 624 843 B1**
(45) Veröffentlichungstag und Bekanntmachung des Hinweises auf die Patenterteilung: **03.12.1997**
(21) Anmeldenummer: 94106524.5
(22) Anmeldetag: 26.04.1994
(51) Int. Cl.: G06F 11/00, G06F 11/16, H04Q 9/14

(54) **Adressierfehlererkennungsverfahren für ein elektrisches Gerät**
Method for detecting addressing error for an electrical device
Procédé de détection d'erreur d'adressage pour un appareil électrique

(30) Priorität: 11.05.1993 DE 4315713
(43) Veröffentlichungstag der Anmeldung: 17.11.1994
(73) Patentinhaber: SIEMENS AKTIENGESELLSCHAFT, 80333 München (DE)
(72) Erfinder: Barthel, Herbert, Dipl.-Ing., D-91074 Herzogenaurach (DE); Schütz, Hartmut, Dipl.-Ing., D-91336 Heroldsbach (DE); Daar, Horst, Dr., D-91058 Erlangen (DE)

(56) Entgegenhaltungen:
- EP-A- 0 199 933
- EP-A- 0 421 471
- DE-A- 2 423 260
- US-A- 3 796 994
- US-A- 4 041 460

## Beschreibung

Die vorliegende Erfindung betrifft ein Adressierfehlererkennungsverfahren für ein elektrisches Gerät, das aus einer Zentraleinheit und von der Zentraleinheit über ein Kommunikationssystem mittels nebeneinheitenspezifischer Adressen ansprechbaren Nebeneinheiten besteht, wobei jede Nebeneinheit ein von der Zentraleinheit schreib- und lesbares Speicherelement aufweist.

Aus der DE 20 48 670 ist ein Adressierfehlererkennungsverfahren bekannt, bei dem von einer Zentraleinheit über ein Kommunikationssystem aus einer vorbestimmten Speicherstelle einer adressierten Speichereinheit ein Bitmuster ausgelesen wird, welches der adressierten Speichereinheit individuell zugeordnet ist. In der Zentraleinheit wird das so gewonnene Bitmuster mit einem in der Zentraleinheit abgespeicherten, dieser Peripherieeinheit zugeordneten Bitmuster verglichen. Bei Nichtübereinstimmung wird auf Adressierungsfehler erkannt.

Die Aufgabe der vorliegenden Erfindung besteht darin, ein Verfahren anzugeben, mittels dessen ermittelt werden kann, ob auf eine nebeneinheitenspezifische Adresse, auf die nur die "richtige" Nebeneinheit ansprechen sollte, zusätzlich eine weitere Nebeneinheit reagiert, so daß Folgefehler vermieden werden können.

Die Aufgabe wird dadurch gelöst,
- daß zuerst in den Speicherelementen der Nebeneinheiten eine Erstkennung abgespeichert wird,
- daß sodann in einer bestimmten Reihenfolge der Inhalt jedes der Speicherelemente der Nebeneinheiten ausgelesen, die so ermittelte Istkennung mit der zuvor abgespeicherten Erstkennung verglichen und eine von der Erstkennung verschiedene Zweitkennung in dieses Speicherelement geschrieben wird, und
- daß schließlich auf Adressierungsfehler erkannt wird, sobald eine der so ermittelten Istkennungen von der zuvor abgespeicherten Erstkennung abweicht,

Das Adressierfehlererkennungsverfahren wird vorzugsweise bei Automatisierungssystemen, insbesondere bei redundanten Automatisierungssystemen, angewendet. Bei Automatisierungssystemen besteht nämlich bei einer Fehlfunktion die unmittelbare Gefahr von Sach- und sogar Personenschäden.

Weitere Vorteile und Einzelheiten ergeben sich aus der nachfolgenden Beschreibung eines Ausführungsbeispiels, anhand der Zeichnung und in Verbindung mit den weiteren Unteransprüchen. Dabei zeigt:

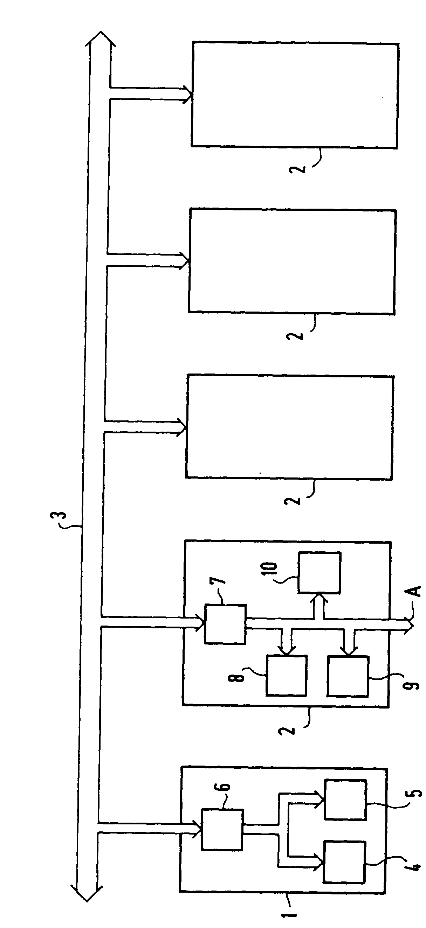

FIG 1 ein Blockschaltbild eines Automatisierungssystems.

Gemäß FIG 1 ist das elektrische Gerät als modulares Automatisierungssystem ausgebildet. Es besteht aus der Zentraleinheit 1 und aus den Baugruppen 2, die die Nebeneinheiten des elektrisches Geräts bilden. Zentraleinheit 1 und Baugruppen 2 können über den Bus 3 miteinander kommunizieren. Der Aufbau von Zentraleinheit 1 und Baugruppen 2 wird im folgenden nur soweit erläutert, wie dies zum Verständnis der vorliegenden Erfindung erforderlich ist.

Die Zentraleinheit 1 weist gemäß FIG 1 einen Prozessor 4 und einen Speicher 5 auf. Im Speicher 5 ist unter anderem ein Programm abgespeichert, das vom Prozessor 4 ausgeführt wird. Bei der Ausführung des Programms greift der Prozessor 4 über den Controller 6 und den Bus 3 auf die Baugruppen 2 zu. Die Baugruppen 2 werden dabei mittels baugruppenspezifischer Adressen angesprochen. Die Adresse kann beispielsweise durch den Steckplatz definiert sein, an dem eine Baugruppe in das Automatisierungssystem eingesteckt ist.

Die Baugruppen 2 weisen zur Kommunikation ebenfalls einen Controller 7 auf. Ferner weisen sie als Speicherelemente ein 1-Bit-Register 8, ein Adressenregister 9 sowie einen Speicher 10 auf. Die Baugruppen 2 sind im wesentlichen gleich aufgebaut. Daher wurde in FIG 1 nur eine der Baugruppen 2 detailliert dargestellt.

Im Normalbetrieb des Automatisierungssystems greift der Controller 7 auf den Speicher 10, gegebenenfalls auch direkt auf Sensoren und/oder Stellglieder zu, wie dies in FIG 1 durch den Pfeil A angedeutet ist.

Wenn eine Baugruppe 2 fehlerhaft arbeitet, kann es geschehen, daß sie zusätzlich zur angesprochenen Baugruppe 2 reagiert, obwohl sie eigentlich nicht angesprochen ist. Zur Ermittlung derartiger fehlerhafter Baugruppen-Mehrfachadressierungen wird bei der Inbetriebnahme des Automatisierungssystems zunächst folgendes Verfahren ausgeführt:

Die Zentraleinheit 1 speichert in die 1-Bit-Register 8 aller vorhandenen Baugruppen 2 eine Erstkennung ab, die für alle Baugruppen 2 identisch ist, beispielsweise eine logische Eins. Sodann liest die Zentraleinheit 1 aus der Baugruppe 2 mit der niedrigsten Adresse das Register 8 aus und prüft, ob der gelesene Wert mit der Erstkennung übereinstimmt, also logisch Eins ist. Sodann wird in das soeben ausgelesene Register 8 eine von der Erstkennung verschiedene Zweitkennung geschrieben, im vorliegenden Fall also eine logische Null.

Das Auslesen des Registers 8, das Überprüfen des Inhalts mit der Erstkennung und das Einschreiben der Zweitkennung wird nacheinander bei allen Baugruppen 2 ausgeführt. Die Reihenfolge, in der die Baugruppen 2 angesprochen werden, ist dabei durch die Adressen der Baugruppen 2 bestimmt. Nach dem Ausführen obenstehenden Verfahrens bei einer bestimmten Baugruppe 2 wird nämlich als nächstes die Baugruppe 2 mit der nächsthöheren Adresse angesprochen.

Wenn bei einer der Baugruppen 2 der ausgelesene Wert von der Erstkennung abweicht, also logisch Null ist, wird auf Adressierungsfehler erkannt. In diesem Fall wäre fälschlicherweise nämlich eine Baugruppe 2 bereits angesprochen worden, als in das Register 8 einer Baugruppe 2 mit einer niedrigeren Adresse die Zweitkennung eingespeichert wurde.

Mit dem obenstehend beschriebenen Verfahren werden nur dann fehlerhafte Baugruppen 2 erkannt, wenn sie auf Adressen ansprechen, die niedriger als ihre eigentliche Adresse sind. Um auch Baugruppen 2 aussondern zu können, die auf Adressen ansprechen, die höher als ihre eigene Adresse sind, wird daher nach dem Abprüfen der Baugruppen 2 in aufsteigender Adreßfolge erneut der Inhalt der Register 8 ausgelesen, diesmal aber in absteigender Adreßfolge. Es wird diesmal also mit der Baugruppe 2 mit der höchsten baugruppenspezifischen Adresse begonnen. Es wird erneut die Istkennung aus dem Register 8 ausgelesen, mit der Zweitkennung verglichen und eine von der Zweitkennung verschiedene Drittkennung, hier also wieder eine logische Eins, in dieses Register 8 geschrieben. Analog zum obenstehenden Verfahren wird ein Adressierungsfehler erkannt, sobald eine ausgelesene Istkennung von der Zweitkennung abweicht.

Um die Sicherheit des Verfahrens noch weiter zu erhöhen, kann noch ein zweiter Durchlauf durch die Baugruppen erfolgen, wobei diesmal Erst- und Zweitkennung jedoch vertauscht sind. Es wird also beim zweiten Durchlauf zunächst einen logische Null in die Register 8 geschrieben, die dann überprüft und auf logisch Eins geändert wird und beim Rückdurchlauf wieder in logisch Null.

Um auch Baugruppenfehler erkennen zu können, die erst im Betrieb des Automatisierungsgeräts auftreten, wird obenstehendes Verfahren vorzugsweise nicht nur bei der Inbetriebnahme, sondern auch von Zeit zu Zeit im Betrieb des Automatisierungsgeräts abgearbeitet, z. B. jede Minute.

So läßt sich auf einfache Weise feststellen, ob auf eine bestimmte Adresse aufgrund eines Hardwarefehlers einer der Baugruppen 2 mehr als eine Baugruppe 2 reagiert. Wenn kein Adressierungsfehler gefunden wurde, so ist gewährleistet, daß auf jede Baugruppenadresse nur eine der Baugruppen 2 reagiert.

Die obenstehend beschriebene Erfindung wird besonders vorteilhaft bei redundanten, d.h. hochverfügbaren und/oder sicherheitsgerichteten Automatisierungssystemen verwendet. Grund dafür ist, daß Fehler in hochverfügbaren Automatisierungssystemen hohe Ausfallschäden verursachen können. Bei sicherheitsgerichteten Automatisierungssystemen dagegen können Fehler sogar zu Sach- und/oder Personenschäden führen.

## Patentansprüche

1. Adressierfehlererkennungsverfahren für ein elektrisches Gerät, das aus einer Zentraleinheit (1) und von der Zentraleinheit (1) über ein Kommunikationssystem (3) mittels nebeneinheitenspezifischer Adressen ansprechbaren Nebeneinheiten (2) besteht, wobei jede Nebeneinheit (2) ein von der Zentraleinheit (1) schreib- und lesbares Speicherelement (8) aufweist, gekennzeichnet durch folgende Schritte:
- zuerst wird in den Speicherelementen (8) der Nebeneinheiten (2) eine Erstkennung abgespeichert,
- sodann wird in einer bestimmten Reihenfolge der Inhalt jedes der Speicherelemente (8) der Nebeneinheiten (2) ausgelesen, die so ermittelte Istkennung mit der zuvor abgespeicherten Erstkennung verglichen und eine von der Erstkennung verschiedene Zweitkennung in dieses Speicherelement (8) geschrieben,
- schließlich wird auf Adressierungsfehler erkannt, sobald eine der so ermittelten Istkennungen von der zuvor abgespeicherten Erstkennung abweicht.

2. Adressierfehlererkennungsverfahren nach Anspruch 1, **dadurch gekennzeichnet**, daß nach dem Auslesen des Inhalts jedes der Speicherelemente (8) der Nebeneinheiten (2) und dem Schreiben der Zweitkennung in die Speicherelemente (8)
- in einer zur bestimmten Reihenfolge inversen Reihenfolge der Inhalt jedes der Speicherelemente (8) ausgelesen, die so ermittelte Istkennung mit der zuvor abgespeicherten Zweitkennung verglichen und eine von der Zweitkennung verschiedene Drittkennung in dieses Speicherelement (8) geschrieben wird und
- auf Adressierungsfehler erkannt wird, sobald eine der so ermittelten Istkennungen von der Zweitkennung abweicht.

3. Adressierfehlererkennungsverfahren nach Anspruch 1 oder 2, **dadurch gekennzeichnet**, daß die Erstkennung und/oder die Zweitkennung für alle Nebeneinheiten identisch (2) sind.

4. Adressierfehlererkennungsverfahren nach Anspruch 2 oder 3, **dadurch gekennzeichnet**, daß die Drittkennung mit der Erstkennung identisch ist.

5. Adressierfehlererkennungsverfahren nach einem der obigen Ansprüche, **dadurch gekennzeichnet** , daß es bei Automatisierungssystemen, insbesondere bei redundanten Automatisierungssystemen, angewendet wird.

## Claims

1. Method for detecting addressing errors for an electrical device, which comprises a central unit (1) and secondary units (2) which can be addressed by the central unit (1) by way of a communication system (3) by means of addresses specific to secondary units, whereby each secondary unit (2) has a memory element (8) which can be written and read by the central unit (1), characterized by the following steps:
- first of all a first identifier is stored in the memory elements (8) of the secondary units (2),
- then in a certain sequence the content of each of the memory elements (8) of the secondary units (2) is read, the actual identifier determined in this way is compared with the previously stored first identifier, and a second identifier different to the first identifier is written into this memory element (8),
- finally addressing errors are detected as soon as one of the actual identifiers which are determined in this way differs from the previously stored first identifier.

2. Method for detecting addressing errors according to claim 1, characterized in that after the content of each of the memory elements (8) of the secondary units (2) has been read and after the second identifier has been written into the memory elements (8)
- in a sequence opposite to the determined sequence the content of each of the memory elements (8) is read, the actual identifier determined in this way is compared with the previously stored second identifier and a third identifier different to the second identifier is written into this memory element (8) and
- addressing errors are detected as soon as one of the actual identifiers which are determined in this way differs from the second identifier.

3. Method for detecting addressing errors according to claim 1 or 2, characterized in that the first identifier and/or the second identifier are identical (2) for all secondary units.

4. Method for detecting addressing errors according to claim 2 or 3, characterized in that the third identifier is identical to the first identifier.

5. Method for detecting addressing errors according to one of the above claims, characterized in that it is used in automation systems, in particular in redundant automation systems.

## Revendications

1. Procédé de détection d'erreurs d'adressage pour un appareil électrique, qui est constitué d'une unité centrale (1) et d'unités auxiliaires pouvant être adressées par l'unité centrale (1) par l'intermédiaire d'un système (3) de communication au moyen d'adresses spécifiques aux unités auxiliaires, chaque unité auxiliaire (2) comportant un élément (8) de mémoire dans lequel l'unité centrale (1) peut lire et écrire, caractérisé par les étapes suivantes :
- on mémorise d'abord dans les éléments (8) de mémoire des unités auxiliaires (2) une première caractérisation,
- puis on lit dans un ordre déterminé le contenu de chacun des éléments (8) de mémoire des unités auxiliaires (2), on compare la caractérisation réelle ainsi déterminée à la première caractérisation mémorisée auparavant et on écrit une deuxième caractérisation différente de la première caractérisation dans cet élément (8) de mémoire,
- enfin on reconnaît une erreur d'adressage, dès que l'une des caractérisations réelles ainsi déterminées est différente de la première caractérisation mémorisée auparavant.

2. Procédé de détection d'erreurs d'adressage suivant la revendication 1,
caractérisé en ce que après la lecture du contenu de chacun des éléments (8) de mémoire des unités auxiliaires (2) et l'écriture de la deuxième caractérisation dans les éléments (8) de mémoire,
- on lit, dans un ordre inverse de l'ordre déterminé, le contenu de chacun des éléments (8) de mémoire, on compare la caractérisation réelle ainsi déterminée à la deuxième caractérisation mémorisée auparavant et on écrit dans cet élément (8) de mémoire une troisième caractérisation différente de la deuxième caractérisation, et
- on reconnaît une erreur d'adressage, dès que l'une des caractérisations réelles ainsi déterminées est différente de la deuxième caractérisation.

3. Procédé de détection d'erreurs d'adressage suivant la revendication 1 ou 2,
caractérisé en ce que la première caractérisation et/ou la deuxième caractérisation sont identiques pour toutes les unités auxiliaires (2).

4. Procédé de détection d'erreurs d'adressage suivant la revendication 2 ou 3,
caractérisé en ce que la troisième caractérisation est identique à la première caractérisation.

5. Procédé de détection d'erreurs d'adressage suivant l'une des revendications précédente,
caractérisé en ce que il est appliqué à des systèmes d'automatisation, notamment dans des systèmes d'automatisation redondants.
